# EUROPÄISCHE PATENTSCHRIFT

(11) **EP 4 133 926 B1**
(45) Veröffentlichungstag und Bekanntmachung des Hinweises auf die Patenterteilung: **12.08.2026**
(21) Anmeldenummer: 22168320.4
(22) Anmeldetag: 14.04.2022
(51) Int. Cl.: A01B 71/02, A01B 79/00, A01B 76/00

(54) **VERFAHREN ZUR PLANUNG EINES OPTIMIERTEN BODENBEARBEITUNGSPROZESSES**
METHOD FOR PLANNING AN OPTIMIZED SOIL PROCESSING PROCESS
PROCÉDÉ DE PLANIFICATION D'UN PROCESSUS OPTIMISÉ DE TRAITEMENT DU SOL

(30) Priorität: 10.08.2021 DE 102021120812
(43) Veröffentlichungstag der Anmeldung: 15.02.2023
(73) Patentinhaber: CLAAS Tractor S.A.S., 78141 Vélizy-Villacoublay Cedex (FR)
(72) Erfinder: Birkmann, Christian, 33775 Versmold (DE); Wieckhorst, Jan Carsten, 29525 Uelzen Orsteil Hanstedt 2 (DE); Pieper, Jona, 59394 Nordkirchen (DE); Schaub, Christian, 33098 Paderborn (DE); Ehlert, Christian, 33719 Bielefeld (DE); Meyer, Lennart, 52072 Aachen (DE)
(74) Vertreter: CLAAS Gruppe

(56) Entgegenhaltungen:
- EP-A1- 3 578 032
- DE-A1- 102018 124 705

## Beschreibung

Die vorliegende Erfindung betrifft ein Verfahren zur Planung eines optimierten Bodenbearbeitungsprozesses gemäß dem Oberbegriff von Anspruch 1 sowie eine Planungs-Steueranordnung gemäß Anspruch 17.

Landwirtschaftliche Arbeitsmaschinen wie Mähdrescher, Feldhäcksler und Traktoren, können mit diversen Anbaugeräten kombiniert werden. Diese Anbaugeräte werden über eine Geräteschnittstelle an die landwirtschaftliche Arbeitsmaschine angebaut. Vorliegend stehen landwirtschaftliche Gespanne mit einer landwirtschaftlichen Arbeitsmaschine und einem landwirtschaftlichen Anbaugerät im Vordergrund. Dieses wird vorzugsweise von der landwirtschaftlichen Arbeitsmaschine gezogen.

Derartige Anbaugeräte dienen allgemein der Durchführung einer landwirtschaftlichen Arbeitsaufgabe. Im Vordergrund stehen hier Bodenbearbeitungen wie das Pflügen oder Grubbern. Diesen Bodenbearbeitungen ist gemeinsam, dass die Anbaugeräte dabei zumeist auf eine spezifische Arbeitstiefe eingestellt werden. Der Erfolg und der Energieverbrauch der Bodenbearbeitung hängen oft maßgeblich von der Arbeitstiefe ab. Gleichzeitig hängt diese jedoch von diversen Maschinenparametern des Anbaugeräts und der landwirtschaftlichen Arbeitsmaschine ab.

Herkömmlich wird die Arbeitstiefe meist zu Beginn der Bodenbearbeitung, je nach Anbaugerät sogar manuell, eingestellt. Diese Einstellung erfolgt oft aus der Erfahrung des Benutzers und nicht anhand objektiver Kriterien. Weiterhin wird die Arbeitstiefe oft während des Bodenbearbeitungsprozesses nicht nachgestellt. Dabei wird jedoch vernachlässigt, dass auch Maschinenparameter der landwirtschaftlichen Arbeitsmaschine einen Einfluss auf die Arbeitstiefe haben. So kann ein Heckkraftheber einen Pflug beispielsweise ausheben oder dessen Arbeitstiefe verstellen. Diese Änderungen sind für den Benutzer nicht transparent, werden oft abhängig von Regelungsparametern wie einer fehlenden Menge an Zugkraft vorgenommen und dabei nicht auf den Bodenbearbeitungsprozess abgestimmt. Zwar ist aus der WO 2019/158454 A1 auch ein Verfahren bekannt, um die Arbeitstiefe zu regeln, jedoch handelt es sich dabei um eine relative Arbeitstiefe, die mittels einer Zylinderlänge des Pfluges ermittelt wird und nicht in Relation zum Boden. Maschinenparameter der landwirtschaftlichen Arbeitsmaschine bleiben somit weiter unberücksichtigt.

Hinzu kommt das Problem, dass ein Feld selten homogen genug ist, um optimal mit einer einzigen Arbeitstiefe bearbeitet werden zu können. Aus der DE 10 2019 125 896 A1 ist beispielsweise ein Verfahren zu Ermittlung von Bodeneigenschaften bekannt. Auf Basis dieser Bodeneigenschaften kann grundsätzlich eine optimierte Arbeitstiefe für verschiedene Teile berechnet werden. Es verbleiben jedoch die genannten Probleme bei der Steuerung oder der Regelung der Arbeitstiefe.

Sensorik zur Ermittlung einer absoluten Arbeitstiefe ist zwar grundsätzlich möglich, jedoch relativ kostenintensiv. Ein landwirtschaftlicher Betrieb hat oft diverse landwirtschaftliche Anbaugeräte, die alle von einer Ermittlung einer Arbeitshöhe profitieren würde. Die Arbeitstiefe wird als Spezialfall der Arbeitshöhe betrachtet. Die Arbeitstiefe ist eine Arbeitshöhe, die in den Boden ragt. Aus wirtschaftlichen Gründen können die Anbaugeräte jedoch nicht alle mit einem Sensor zur Ermittlung der Arbeitshöhe versehen werden. Letztlich wird daher die absolute Arbeitstiefe von bodenbearbeitenden Anbaugeräten in der Praxis üblicherweise nicht ermittelt.

Die Schriften DE 10 2018 124705 A1 und EP 3 578 032 A1 beschreiben weitere bekannte Verfahren.

Weiterhin ist die Planung von Bodenbearbeitungsprozessen oft eine manuelle Tätigkeit, die auf der Erfahrung eines Landwirts basiert.

Es ist dabei eine Herausforderung den bekannten Stand der Technik hinsichtlich der Bodenbearbeitungen zu verbessern.

Der Erfindung liegt das Problem zugrunde, die bekannten Verfahren derart auszugestalten und weiterzubilden, dass eine Lösung zur verbesserten Bodenbearbeitung geschaffen wird, die eine Verbesserung bei den genannten Nachteilen erzielt und dabei kosteneffizient einsetzbar ist.

Das obige Problem wird durch die Merkmale von Anspruch 1 gelöst.

Wesentlich ist die grundsätzliche Überlegung, dass mittels einer Planungs-Steueranoordnung Handlungsempfehlungen für einen Bodenbearbeitungsprozess generiert werden können. Diese Handlungsempfehlungen werden aus einem Expertenmodell ermittelt. Durch die Berücksichtigung von ortsabhängigen Bodendaten eines Feldes können dabei spezifische Handlungsempfehlungen ermittelt werden. Ortsabhängig sind dabei Bodendaten, die sich über ein Feld ändern und Daten entsprechend abhängig von einer Position auf dem Feld für unterschiedliche Positionen auf dem Feld abbilden.

Im Einzelnen wird ein Verfahren zur Planung eines optimierten Bodenbearbeitungsprozesses eines Feldes für ein landwirtschaftliches Gespann, wobei das landwirtschaftliche Gespann eine landwirtschaftliche Arbeitsmaschine und ein bodenbearbeitendes landwirtschaftliches Anbaugerät aufweist, wobei eine Planungs-Steueranordnung vorgesehen ist, wobei die Planungs-Steueranordnung mittels des Expertenmodells aus Bodendaten des Feldes Handlungsempfehlungen für den Bodenbearbeitungsprozess ermittelt, wobei die Bodendaten des Feldes ortsabhängig sind, vorgeschlagen.

Bei einer bevorzugten Ausgestaltung gemäß Anspruch 2 kann eine Handlungsempfehlung die Frage betreffen, welche Art von Bodenbearbeitung vorgenommen werden sollte. Der Effekt, der durch die Auswahl optimierter Bodenbearbeitungen auf der Kosten- oder Effektivitätsseite erzielt werden kann, ist gegenüber dem Effekt von Änderungen der Durchführung der Bodenbearbeitung selbst groß. Diese Entscheidung wird durch eine ganzheitliche Betrachtung des Feldes basierend auf den ortsabhängigen Bodendaten getroffen. Dabei können aus Effizienzgründen auch suboptimale Lösungen für einzelne Feldbereiche in Betracht gezogen werden, wenn dadurch beispielsweise eine Art der Bodenbearbeitung ganz eingespart wird.

Bei einer besonders bevorzugten Ausgestaltung gemäß Anspruch 3, wird neben der Art der Bodenbearbeitung auch deren Ausgestaltung vorgeschlagen. Die kombinierte Optimierung der Art der Bodenbearbeitung und deren Ausgestaltung ermöglicht eine verbesserte Optimierung des Endergebnisses der Bodenbearbeitung. Beispielsweise ist denkbar, manchmal ein Grubbern durch ein aufwändigeres Pflügen ersetzt werden oder andersherum.

Erfindungsgemäß ist vorgesehen, dass ein einzelner Sensor zu Ermittlung der Arbeitshöhe diverser landwirtschaftlicher Anbaugeräte genutzt wird. Dieser Sensor wird an einer Montageposition an der landwirtschaftlichen Arbeitsmaschine oder den Anbaugeräten befestigt. Durch die Wiederverwendung muss nicht für jedes Anbaugerät ein eigener Sensor angeschafft werden, sondern es wird möglich, diverse Arbeitsprozesse zu unterstützen. Hier steht nun die Nutzung eines solchen Sensors bei der Bodenbearbeitung im Vordergrund, wobei die Montageposition aus den Messdaten herausgerechnet wird oder eine optimierte Arbeitstiefe in Abhängigkeit der Montageposition ermittelt wird. Dadurch wird eine kostengünstige Optimierung einer Bodenbearbeitung ermöglicht, die insbesondere auch die Möglichkeit bietet, die absolute Arbeitstiefe auf Basis der Messdaten des Sensors auf dem Feld ortsabhängig zu regeln. Somit muss das gesamte Feld nicht mehr mit einer einzigen, sich gegebenenfalls unkontrolliert ändernden, Arbeitstiefe bearbeitet werden. Es wird vielmehr möglich, die Bodenbearbeitung optimiert zu planen und durchzuführen.

In einer bevorzugten Ausgestaltung gemäß Anspruch 4 wird eine modulare Sensorik verwendet, bei der der Sensor reversibel an den Anbaugeräten montierbar ist und zur Ermittlung der Arbeitshöhe mehrerer Anbaugeräte genutzt wird. Dies weist den Vorteil auf, dass die Ermittlung einer Arbeitshöhe mittels eines Sensors an einem Anbaugerät technisch auf einfache Art und Weise durch die Ermittlung eines Abstandes zwischen dem Sensor und dem Boden gelöst werden kann. Durch die Wiederverwendung des Sensors wird diese Messung kostengünstig für viele Anbaugeräte verfügbar.

Der Sensor kann als Abstandssensor ausgestaltet sein. Anspruch 5 gibt bevorzugte Typen von Abstandssensoren an. Diese haben sich im landwirtschaftlichen Bereich besonders bewährt. Insbesondere bieten sie einen guten Ausgleich zwischen Robustheit und Kosten.

Die Ansprüche 6 bis 11 geben bevorzugt von der Planungs-Steueranordnung berücksichtigte Bodendaten an. Anspruch 6 gibt dabei allgemeine Bodendaten an, die Auskunft über den generellen Zustand, insbesondere des gesamten, Feldes geben.

Gemäß Anspruch 7 können die ortsabhängigen Bodendaten insbesondere Fahrspurdaten umfassen, die vorrangig angeben, wie sehr der Boden des Feldes in einer Fahrspur kompaktiert wurde. Damit kann berücksichtigt werden, dass der Bodenzustand innerhalb der Fahrspuren signifikant von dem Bodenzustand außerhalb der Fahrspuren abweichen kann.

Weiterhin können die ortsabhängigen Bodendaten gemäß Anspruch 8 Arbeitsprozessdaten zu vergangenen Bodenbearbeitungsprozessen und/oder vergangenen Feldbestandsbearbeitungsprozessen umfassen. Ein Feld wird neben allgemeinen Eigenschaften und dergleichen vor allem durch seine Verwendung und Bearbeitung geprägt. Unterschiedliche Fruchtfolgen, unterschiedlichen Bodenbearbeitungen und dergleichen verändern den Feldzustand und den Bodenzustand. Dabei sind beispielsweise Wurzeleigenschaften des Feldbestandes, Düngevorgänge und natürlich invasive Bodenbearbeitungen wie das Pflügen relevant.

Um das Modell, insbesondere feldabhängig, anpassen zu können, oder ganz allgemein Feedback zu berücksichtigen, kann gemäß Anspruch 9 vorgesehen sein, dass die Arbeitsprozessdaten Erntedaten vergangener Ernteperioden umfassen, Diese können genutzt werden, um unbekannte Einflüsse und Eigenschaften des Feldes zu approximieren.

Gemäß Anspruch 10 können auch Umweltdaten in den Bodendaten enthalten sein. Diese können eine Bodenart und/oder einen Bodenzustand betreffen. Sie können insbesondere durch Laboranalysen aus Bodenproben ermittelt werden. Auch Düngevorgänge und das Wetter haben einen Einfluss auf den Bodenzustand.

Weiterhin können Bilddaten und/oder Satellitendaten des Feldes genutzt werden, um beispielsweise Biomassedaten und Unkrautdaten zu erhalten und zu berücksichtigen. Diese Ausgestaltung ist Gegenstand von Anspruch 11.

Die Planungs-Steueranordnung kann gemäß Anspruch 12 mittels des Modells auch den vorhandenen Maschinenpark aus vorhandenen landwirtschaftlichen Arbeitsmaschinen und Anbaugeräten berücksichtigen. Dabei haben unterschiedliche Arbeitsmaschinen und Anbaugeräte unterschiedliche Einflüsse auf den Boden, können überhaupt unterschiedliche Arbeitstiefen realistisch leisten und gegebenenfalls müssen mehrere Felder gleichzeitig bestellt werden, sodass der Maschinenpark entsprechend verteilt werden muss.

Mittels des Modells können auch weitere Einstellungen des Anbaugerätes optimiert werden. Diese Ausgestaltung ist Gegenstand von Anspruch 13. Insbesondere ist dabei eine Schnittbreite eines Pfluges relevant. So können alle Parameter einer Bodenbearbeitung aufeinander abgestimmt werden.

Bei einer Ausgestaltung gemäß Anspruch 14 ist vorgesehen, dass die Planungs-Steueranordnung mittels des Modells eine optimierte Auswahl möglicher Sensoren und Montagepositionen vorschlägt. Je mehr landwirtschaftliche Arbeitsmaschinen, landwirtschaftliche Anbaugeräte und Sensoren vorhanden sind, desto komplexer wird deren Verwendung. Beispielsweise können die Sensoren auf diejenigen Arbeitsprozesse verteilt werden, bei denen Abweichungen der Arbeitshöhe oder Arbeitstiefe den größten Einfluss haben, um mit limitierten Ressourcen ein optimiertes Ergebnis zu erzielen.

Ein Vorteil der Sensoranordnung und der Wiederverwendung des Sensors ist, dass, wie gemäß Anspruch 15 vorgeschlagen, Messwerte vergangener Bodenbearbeitungsprozesse als Bodendaten verwendet werden können.

Es kann auch vorgesehen sein, dass Zielvorgaben zu konkurrierenden Zielen von der Planungs-Steueranordnung berücksichtigt werden. Beispielsweise kann eine Bodenbearbeitung auf eine maximale Geschwindigkeit oder eine maximale Kraftstoffeffizienz ausgerichtet werden. Keine der beiden Möglichkeiten ist als solche notwendigerweise die immer richtige. Muss eine Bodenbearbeitung beispielsweise vor einem Wetterumschwung fertiggestellt werden, kann die Geschwindigkeit priorisiert werden. Diese Ausgestaltung ist Gegenstand von Anspruch 16.

Nach einer weiteren Lehre gemäß Anspruch 17, der eigenständige Bedeutung zukommt, wird eine Planungs-Steueranordnung eingerichtet zur Verwendung in dem vorschlagsgemäßen Verfahren beansprucht.

Auf alle Ausführungen zu dem vorschlagsgemäßen Verfahren darf verwiesen werden.

Im Folgenden wird die Erfindung anhand einer lediglich Ausführungsbeispiele darstellenden Zeichnung näher erläutert. In der Zeichnung zeigt
- Fig. 1: eine landwirtschaftliche Flotte mit Sensoranordnung während der Durchführung des vorschlagsgemäßen Verfahrens und
- Fig. 2: schematisch die Messung und Berechnung unterschiedlicher Arbeitstiefen bei einem Pflug.

Bei dem dargestellten und insoweit bevorzugten Ausführungsbeispiel handelt es sich bei der landwirtschaftlichen Arbeitsmaschine 1 um einen Traktor. Die Arbeitsmaschine 1 lässt sich über mindestens eine Geräteschnittstelle 2 mit mindestens einem Anbaugerät 3 bestücken. Bei der Geräteschnittstelle 2 handelt es sich hier ganz allgemein um eine mechanische Kupplung zwischen der Arbeitsmaschine 1 und dem Anbaugerät 3. Bei dem dargestellten und insoweit bevorzugten Ausführungsbeispiel ist die Geräteschnittstelle 2 als Dreipunkt-Kraftheber ausgestaltet, der für die Kopplung mit dem Anbaugerät 3 zwei Unterlenker und einen Oberlenker aufweist. Die Geräteschnittstelle 2 kann als Front- oder Heckkraftheber ausgestaltet sein. Grundsätzlich kann es sich bei der Geräteschnittstelle 2 aber auch um ein Zugpendel handeln. Andere Varianten für die Geräteschnittstelle 2 sind Systeme mit einfacher Zugzapfenkupplung, mit Hitch Haken, mit Kugelkopfkupplung oder dergleichen. Vorzugsweise ist das bodenbearbeitende Anbaugeräte 3 ein eigenes Fahrzeug.

Das in den Figuren dargestellte und insoweit bevorzugte Ausführungsbeispiel betrifft ein Verfahren zur Planung eines optimierten Bodenbearbeitungsprozesses eines Feldes für ein landwirtschaftliches Gespann 4.

Das landwirtschaftliche Gespann 4 weist eine landwirtschaftliche Arbeitsmaschine 1 und ein bodenbearbeitendes landwirtschaftliches Anbaugerät 3 auf. Bei dem Anbaugerät 3 kann es sich um einen Pflug 5, einen Grubber und dergleichen handeln.

Weiterhin ist in dem Ausführungsbeispiel eine noch zu erläuternde Sensoranordnung 6 zur Ermittlung einer absoluten Arbeitstiefe 7 des landwirtschaftlichen Anbaugerätes 3 vorgesehen. Die Sensoranordnung 6 weist einen Sensor 8 zur Ermittlung von eine absolute Arbeitstiefe 7 des Anbaugerätes 3 betreffenden Messdaten, eine Sensorhalterung 9 und eine Sensor-Steueranordnung 10 auf. Im an einer Montageposition 11 montierten Zustand nimmt der Sensor 8 während des Bodenbearbeitungsprozesses eine absolute Arbeitstiefe 7 des Anbaugerätes 3 betreffende Messdaten auf und überträgt diese an die Sensor-Steueranordnung 10.

Die Sensoranordnung 6 kann als solche eigenständig oder zumindest teilweise in die landwirtschaftliche Arbeitsmaschine 1 integriert sein. Insbesondere kann die Sensor-Steueranordnung 10 der Sensoranordnung 6 beispielsweise eine Steueranordnung der landwirtschaftlichen Arbeitsmaschine 1 sein. Genauso kann diese jedoch auch aus verteilten Recheneinheiten bestehen. Sie kann beispielsweise eine Steuereinheit der landwirtschaftlichen Arbeitsmaschine 1 und eine Cloud-Steuereinheit aufweisen.

Mittels des Sensors 8 wird eine absolute Arbeitstiefe 7 gemessen. Unter dem Begriff "absolut" wird nicht zwingend eine hochgenaue Messung verstanden, sondern allgemeine eine Messung relativ zum Boden 12. Dabei ist grundsätzlich denkbar, dass die Messung relativ zu einem Bauteil erfolgt, dessen Höhe bzw. Tiefe relativ zum Boden 12 wiederum bekannt ist, vorzugsweise wird die absolute Arbeitstiefe 7 jedoch direkt relativ zum Boden 12 gemessen.

Hier ist eine Planungs-Steueranordnung 13 vorgesehen, die mittels eines Modells, insbesondere Expertenmodells, aus Bodendaten des Feldes Handlungsempfehlungen für den Bodenbearbeitungsprozess ermittelt.

Wesentlich ist dabei, dass die Bodendaten des Feldes ortsabhängig sind. Unter dem Begriff "ortsabhängig" ist zu verstehen, dass die Bodendaten sich über ein Feld ändern und entsprechend auf dem einzelnen Feld noch eine Ortsauflösung aufweisen. Die Nutzung von ortsabhängigen Bodendaten zur Ermittlung von Handlungsempfehlungen für die Bodenbearbeitung ermöglicht Handlungsempfehlungen, die für das Feld als Ganzes optimiert sind.

Die Handlungsempfehlung richten sich an einen Benutzer, der diese im Rahmen seiner Erfahrung annehmen, ablehnen oder abändern kann. Die letzte Entscheidung liegt somit beim Benutzer.

Die Handlungsempfehlungen können eine Art der Bodenbearbeitung, vorzugsweise eine Empfehlung ob die Bodenbearbeitung ein Grubbern und/oder ein Pflügen umfassen soll, umfassen. Üblicherweise wird die Entscheidung über die Art der Bodenbearbeitung basierend auf Erfahrung und/oder Gewohnheit vom Benutzer getroffen. Die Optimierung dieser Entscheidung mittels der Planungs-Steueranordnung 13 und somit basierend auf objektiven Kriterien, die in dem Modell hinterlegt sind, führt zu einer möglichen Optimierung, insbesondere durch Auslassen einzelner Arten von Bodenbearbeitungen, die deutliche Kosteneinsparungen erzeugen kann.

Bevorzugt ist es so, dass die Handlungsempfehlungen eine Art der Bodenbearbeitung und Parameter der Bodenbearbeitung, insbesondere eine Arbeitstiefe 7, umfassen. Durch die Berücksichtigung der Parameter der Bodenbearbeitung wird insbesondere ermöglicht, eine aufwändigere Bodenbearbeitung anstelle von zwei Bodenbearbeitungen durchzuführen und/oder bei der Ermittlung der Handlungsempfehlungen die genauen Möglichkeiten dieser Bodenbearbeitungen ortsabhängig zu planen und somit zu berücksichtigen.

Es ist hier und vorzugsweise so, dass die Planungs-Steueranordnung 13 mittels des Modells, insbesondere Expertenmodells, aus den Bodendaten eine optimierte absolute Arbeitstiefe 7 des Anbaugerätes 3 für den Bodenbearbeitungsprozess ermittelt. Eine Gespann-Steueranordnung 14 stellt die ermittelte optimierte Arbeitstiefe 7 für den Bodenbearbeitungsprozess am Anbaugerät 3 ein.

Die Gespann-Steueranordnung 14 und die Sensor-Steueranordnung 10 können einander teilweise überlappen oder identisch sein.

Hier und vorzugsweise ist es nun so, dass die Sensoranordnung 6 eingerichtet ist, mittels desselben Sensors 8 die Arbeitshöhe 15 unterschiedlicher Anbaugeräte 3 zu ermitteln, dass die Sensor-Steueranordnung 10 aus den Messdaten eine montagepositionsunabhängige Arbeitstiefe 7 ermittelt, und/oder, dass die Planungs-Steueranordnung 13 die optimierte absolute Arbeitstiefe 7 montagepositionsabhängig ermittelt.

Die Montageposition 11 kann am Anbaugerät 3 oder der landwirtschaftlichen Arbeitsmaschine 1 angeordnet sein. Sie kann fest oder variabel sein. Bevorzugt wird die Montageposition 11 an den Arbeitsvorgang angepasst, wie im Rahmen der modularen Sensorik noch erläutert wird. Genauso kann der Sensor 8 jedoch auch fest an der landwirtschaftlichen Arbeitsmaschine 1 verbleiben.

Hier und vorzugsweise ist das Modell ein Expertenmodell, das gegebenenfalls um feldspezifisches Feedback erweitert werden kann. Genauso sind jedoch auch andere Arten von Modellen denkbar. Insbesondere ist denkbar, aus den genannten Bodendaten und Ertragsdaten ein Kl-Modell anzulernen.

Die Einstellung der Arbeitstiefe 7 mittels der Gespann-Steueranordnung 14 muss nicht vollumfänglich sein. Es kann weiterhin vorgesehen sein, dass einige Maschinenparameter, die die Arbeitstiefe 7 mitbestimmen, von einem Benutzer 16 manuell eingestellt werden. Vorzugsweise ist dann vorgesehen, dass der Benutzer 16 die eingestellten Maschinenparameter in die Gespann-Steueranordnung 14 eingibt oder diese die Maschinenparameter anderweitig ermittelt.

Die vorliegende Sensoranordnung 6 wird also nicht nur bei einem bodenbearbeitenden Anbaugerät 3 verwendet, sondern findet Einsatz bei mehreren, vorzugsweise unterschiedlichen, Anbaugeräten 3. Diese müssen nicht alle bodenbearbeitend sein. Entsprechend dient der Sensor 8 allgemein der Ermittlung einer Arbeitshöhe 15, die im Falle der Arbeitstiefe 7 auch negativ sein kann.

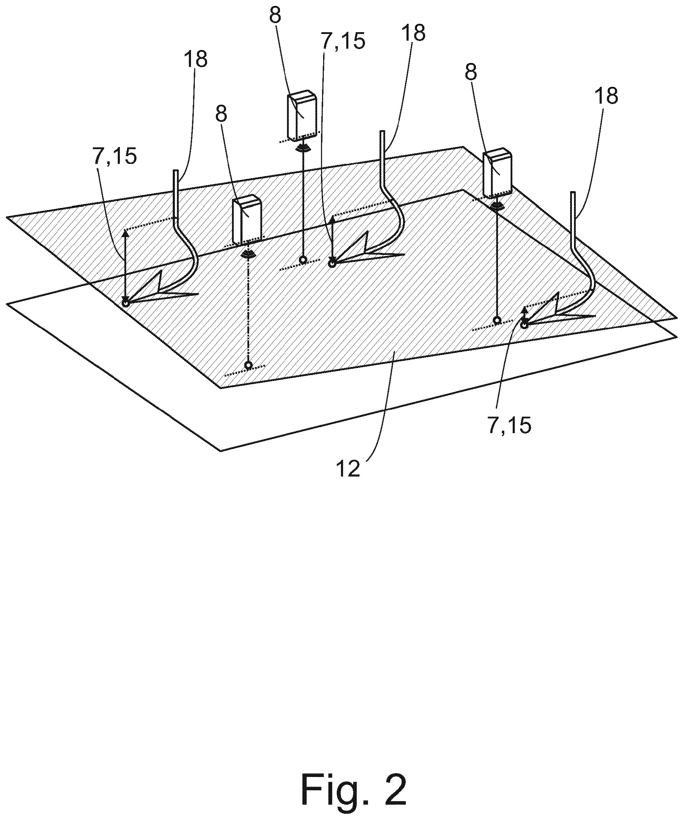

Die Montageposition 11 befindet sich hier und vorzugsweise am bodenbearbeitenden Anbaugerät 3. Fig. 2 zeigt schematisch, wie beispielsweise bei einem bodenbearbeitenden Anbaugerät eine Längsneigung und eine Querneigung vorliegen können, die dafür sorgen, dass die Arbeitstiefe 7 als solche über den Pflug 5 hinweg nicht konstant ist. Fig. 2 zeigt weiterhin, wie mehrere Sensoren 8 genutzt werden können, um diese Neigungen oder allgemein mehrere Arbeitstiefen 7 zu ermitteln.

Weiter ist hier und vorzugsweise vorgesehen, dass der Sensor 8 reversibel an den Anbaugeräten 3 montierbar ist, dass der Sensor 8 zur Ermittlung der Arbeitshöhe 15 mehrerer Anbaugeräte 3 genutzt wird und dafür jeweils an dem Anbaugerät 3 montiert wird, vorzugsweise, dass der Sensor 8 mittels der mindestens einen Sensorhalterung 9 jeweils an einer Montageposition 11 an unterschiedlichen Anbaugeräten 3 reversibel montiert wird, dass die Sensorhalterung 9 vom Sensor 8 getrennt an den unterschiedlichen Anbaugeräten 3 montierbar ist und der Sensor 8 reversibel an der Sensorhalterung 9 montierbar ist.

Weiter ist hier und vorzugsweise vorgesehen, dass der Sensor 8 ein, insbesondere kontaktloser, Abstandssensor ist, vorzugsweise, dass der Abstandssensor auf Basis elektromagnetischer Wellen oder akustischer Wellen oder mechanischer Abtastung funktioniert, weiter vorzugsweise, dass der Abstandssensor ein Radar-Sensor oder ein Lidar-Sensor oder ein optischer Sensor oder ein Ultraschall-Sensor ist, oder, dass der Sensor 8 ein Sensor 8, insbesondere Kraftsensor oder Wegsensor, an einem den Boden 12 berührenden Bauteil, insbesondere einem Tastbügel, einer Schleifkufe oder einer Stützrolle, ist.

Hier und vorzugsweise ermittelt die Sensor-Steueranordnung 10 und/oder die Gespann-Steueranordnung 14 aus einem montagepositionsspezifischen Kalibrationsdatensatz die Arbeitshöhe 15 des jeweiligen Anbaugerätes 3. Insgesamt können alle für die Sensor-Steueranordnung 10 beschriebenen Funktionen auch von der Gespann-Steueranordnung 14 übernommen werden oder beide können durch eine gemeinsamen Steueranordnung gebildet sein.

Die reversible Montage des Sensors 8 mittels der Sensorhalterung 9 an der Montageposition 11 erfolgt derart, dass die Montage zerstörungsfrei reversibel ist. Insbesondere erfolgt sie auch nicht im Rahmen der Herstellung des Anbaugerätes 3, sondern ist vorzugsweise vor Ort auf dem Feld mit einfachen Hilfsmitteln oder ganz ohne Hilfsmittel möglich.

Der montagepositionsspezifische Kalibrationsdatensatz kann, wie noch erläutert wird, grundsätzlich in einem beliebigen Speicher hinterlegt sein, neu erstellt werden oder der Sensor-Steueranordnung 10 anderweitig zur Verfügung stehen.

Eine vorteilhafte Anwendung der modularen Sensorik betrifft auch die Messung der Arbeitshöhe 15 bei einem Anbaugerät 3, das keine eigene Elektronik aufweist. Wie sich im Folgenden noch ergibt, kann die Sensoranordnung 6 insofern autark von dem Anbaugerät 3 sein. Alternativ kann vorgesehen sein, dass der Sensor 8 nicht mit dem Anbaugerät 3 kommuniziert. Genauso kann jedoch vorgesehen sein, dass der Sensor 8 in eine Elektronik des Anbaugerätes 3 integriert wird oder mit dieser kommuniziert. Auch bei Anbaugeräten 3 mit Elektronik kann jedoch vorgesehen sein, dass der Sensor 8 nicht direkt mit dem Anbaugerät 3 kommuniziert. Bevorzugt ist, dass die Sensoranordnung 6 mit Anbaugeräten 3 mit und ohne Elektronik verwendbar ist. Insgesamt kann sogar vorgesehen sein, dass die Ermittlung der Arbeitshöhe 15, abgesehen von der Kalibration selbst, vollständig unabhängig von dem landwirtschaftlichen Anbaugerät 3 ist.

Vorzugsweise ist es so, dass die montagepositionsspezifischen Kalibrationsdatensätze eine Referenzhöhe und/oder eine Ausrichtung des Sensors 8 im montierten Zustand an der jeweiligen Montageposition 11 und/oder eine Lokalisierung der Montageposition 11 relativ zum Anbaugerät 3 umfassen.

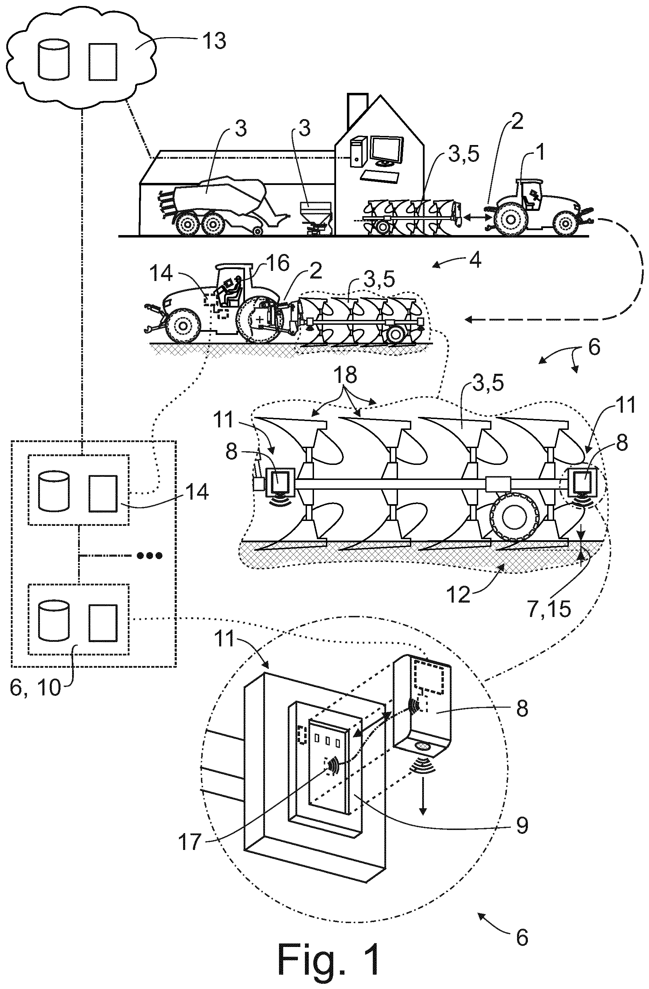

Die Referenzhöhe kann aus einer noch zu erläuternden Kalibrationsroutine stammen und betrifft eine Höhe der Montageposition 11 des Sensors 8 in einem Referenzzustand, vorzugsweise bei einer bekannten Arbeitshöhe 15. Die Ausrichtung des Sensors 8 kann beispielsweise eine Verkippung des Sensors 8 sein. Damit kann berücksichtigt sein, dass der Sensor 8 gegebenenfalls nicht den kürzesten Abstand zum Boden 12 misst. Die Lokalisierung der Montageposition 11 relativ zum Anbaugerät 3 kann aus einer Gruppe von vorgegebenen Montagepositionen 11 gewählt sein oder anderweitig bestimmt werden. Fig. 1 beispielsweise stellt zwei Montagepositionen 11 an einem Pflug 5 dar. Wie noch erläutert wird, ergibt sich auch die Möglichkeit, pro Anbaugerät 3 mehrere Arbeitshöhen 15 zu messen und so beispielsweise eine Neigung des Anbaugerätes 3 zu erfassen. Dafür kann die Lokalisierung der Montageposition 11 eines oder mehrerer Sensoren 8 notwendig sein. Diesbezüglich wird auf Fig. 2 verwiesen.

Es kann vorgesehen sein, dass die montagepositionsspezifischen Kalibrationsdatensätze in einem Speicher der Sensor-Steueranordnung 10 hinterlegt sind. Dieser Speicher ist hier und vorzugsweise ein lokaler Speicher der landwirtschaftlichen Arbeitsmaschine 1. Grundsätzlich kommt jedoch auch ein Cloud-Speicher oder dergleichen in Betracht. In dem Speicher können Kalibrationsdatensätze betreffend Montagepositionen 11 an mindestens zwei, vorzugsweise mindestens drei, unterschiedlichen Typen von Anbaugeräten 3 hinterlegt sein. Der montagepositionsspezifische Kalibrationsdatensatz kann verwendet werden, um aus den Messdaten die montagepositionsunabhängig Arbeitstiefe 7 zu ermitteln und/oder, um aus einer optimierten montagepositionsunabhängigen Arbeitstiefe 7 eine montagepositionsabhängige Arbeitstiefe 7 zu ermitteln.

Hier und vorzugsweise umfassen die Anbaugeräte 3, zu denen eine Arbeitshöhe 15 mittels des Sensor 8 ermittelt wird, unterschiedliche Typen von Anbaugeräten 3. Die unterschiedlichen Typen von Anbaugeräten 3 umfassen vorzugsweise mindestens einen Typ Bodenbearbeitungsgerät, weiter vorzugsweise mindestens zwei Typen Bodenbearbeitungsgeräte. Die Typen Bodenbearbeitungsgeräte umfassen vorzugsweise einen Pflug 5 und/oder einen Grubber und/oder eine Egge. Die unterschiedliche Typen von Anbaugeräten 3 umfassen vorzugsweise einen Düngerstreuer und/oder eine Sämaschine, insbesondere eine Säschar, und/oder ein Mähwerk und/oder eine Pickup und/oder ein Anbaugerät 3 mit einer Pickup, insbesondere eine Ballenpresse oder einen Ladewagen.

Wie im unteren Bereich von Fig. 1 gezeigt, ist hier und vorzugsweise vorgesehen, dass die Sensorhalterung 9 vom Sensor 8 getrennt an den unterschiedlichen Anbaugeräten 3 montierbar ist. Der Sensor 8 ist dann reversibel an der Sensorhalterung 9 montierbar. Es kann grundsätzlich vorgesehen sein, dass die Sensorhalterung 9 ein relativ günstiges Massenbauteil ist, während der Sensor 8 selbst relativ teuer ist. Das vorschlagsgemäße Verfahren ermöglicht die Wiederverwendung des teuren Sensors 8.

Aus Komfortgründen kann vorgesehen sein, dass die Sensorhalterung 9 an dem Anbaugerät 3 verbleibt. Dies hat zum einen im Rahmen der noch zu erläuternden Kalibrationsroutine deutliche Vorteile, ermöglicht jedoch zum anderen auch, die Sensorhalterung 9 stabil und aufwändiger zu montieren, während die Montage des Sensors 8 an der Sensorhalterung 9 selbst vorzugsweise relativ einfach ist. Dies ermöglicht auch die Wiederverwendung derselben Montageposition 11 bei erneutem Anbringen des Sensors 8. Entsprechend kann der montagepositionsspezifische Kalibrationsdatensatz auch der Sensorhalterung 9 an der entsprechenden Montageposition 11 zugeordnet sein. Um diese Zuordnung nun abzubilden, kann vorgesehen sein, dass die Sensorhalterung 9 ein Identifikationsmerkmal 17 aufweist.

Das Identifikationsmerkmal 17 kann von der Sensorhalterung 9 an die Sensor-Steueranordnung 10 übertragen werden. In manchen Ausführungsbeispielen weist diese Sensorhalterung 9 jedoch keine eigene Elektronik auf. Insbesondere deshalb kann auch vorgesehen sein, dass der Sensor 8, insbesondere im montierten Zustand, das Identifikationsmerkmal 17 ausliest und an die Sensor-Steueranordnung 10 überträgt. Vorzugsweise weist die Sensorhalterung 9 einen NFC-Tag auf. Der Sensor 8 kann dann einen NFC-Leser aufweisen, mittels dessen der Sensor 8 das Identifikationsmerkmal 17 der Sensorhalterung 9 ausliest und an die Sensor-Steueranordnung 10 überträgt. Alternativ kann auch vorgesehen sein, dass der Benutzer 16 das Identifikationsmerkmal 17 über ein Eingabegerät, insbesondere ein Smartphone, eingeben oder mit dem Smartphone auslesen kann. Das Eingabegerät kommuniziert dann mit der Sensor-Steueranordnung 10 oder ist Teil der Sensor-Steueranordnung 10. Das Identifikationsmerkmal 17 kann somit insbesondere auch ein QR-Code sein, den der Benutzer 16 beispielsweise in einer dedizierten App ausliest. All diese Möglichkeiten erlauben eine schnelle Montage des Sensors 8, die direkt zur Nutzbarkeit des Sensors 8 zur Ermittlung der Arbeitshöhe 15 führt. Statt eines Smartphones kann auch ein Tablet, ein Laptop, eine Smartwatch oder dergleichen verwendet werden

Zusätzlich oder alternativ kann vorgesehen sein, dass ein Benutzer 16 den montagepositionsspezifischen Kalibrationsdatensatz an einer Eingabeeinheit, vorzugsweise einer Eingabeeinheit einer landwirtschaftlichen Arbeitsmaschine 1, die mit der Sensor-Steueranordnung 10 kommuniziert, auswählt, oder, dass die Sensor-Steueranordnung 10 den montagepositionsspezifischen Kalibrationsdatensatz auf Basis des Identifikationsmerkmal 17 automatisch auswählt.

Weiter ist hier und vorzugsweise vorgesehen, dass die Sensor-Steueranordnung 10 eine Kalibrationsroutine durchführt, in der die Sensor-Steueranordnung 10 einen montagepositionsspezifischen Kalibrationsdatensatz erzeugt und vorzugsweise in dem Speicher abspeichert. Diese Kalibrationsroutine wird in Folgenden näher erläutert. Vorzugsweise ist vorgesehen, dass in der Kalibrationsroutine die Sensor-Steueranordnung 10 eine Referenzhöhe und/oder eine Ausrichtung des Sensors 8 im montierten Zustand an der jeweiligen Montageposition 11 und/oder eine Lokalisierung der Montageposition 11 relativ zum Anbaugerät 3 in dem montagepositionsspezifischen Kalibrationsdatensatz abspeichert.

Die Kalibrationsroutine wird hier und vorzugsweise auf ebenem Grund durchgeführt. Dabei kann die Sensor-Steueranordnung 10 dem Benutzer 16 mitteilen, dass er die landwirtschaftliche Arbeitsmaschine 1 und/oder das Anbaugerät 3 auf ebenem Grund abstellen soll und/oder annehmen, dass dies geschehen ist. Weiter ist vorzugsweise vorgesehen, dass das Anbaugerät 3 eine Referenzhöhe einnimmt. Beim Pflug 5 kann die Referenzhöhe beispielsweise bei einer Arbeitshöhe 15 von null festgelegt werden, wenn die Pflugscharen 18 auf dem Boden 12 abgestellt sind. Bei einer Säeinrichtung beispielsweise kann es jedoch auch vorkommen, dass die niedrigste, einstellbare Höhe und eine übliche Arbeitshöhe 15 zu weit auseinander liegen, um den Sensor 8 so zu kalibrieren und während der Nutzung dennoch innerhalb der Spezifikation des Sensors 8 zu bleiben. Daher kann genauso vorgesehen sein, dass der Benutzer 16 die Referenzhöhe eingeben oder anderweitig bestimmen muss.

Vorzugsweise misst die Sensor-Steueranordnung 10 mittels des Sensors 8 in der Kalibrationsroutine einen Abstand des Sensors 8 zum Boden 12 und speichert diesen als Referenzhöhe ab. Besonders interessant daran ist, dass die Montageposition 11, die von der Sensor-Steueranordnung 10 vorgegeben werden kann, vom Benutzer 16, insbesondere in Höhenrichtung, nicht genau eingehalten werden muss, da sie sich bei der Ermittlung der Arbeitshöhe 15 aus der Referenzhöhe herauskürzt. Auch in andere Richtungen kommt es aufgrund der in der Landwirtschaft vorherrschenden Toleranzen zumeist nicht auf eine hohe Präzision an.

Sofern das Anbaugerät 3 eigene Einstellmöglichkeiten der Arbeitshöhe 15 aufweist, kann vorgesehen sein, dass die während der Kalibrationsroutine vorliegenden Einstellungen ebenfalls in dem montagepositionsspezifischen Kalibrationsdatensatz abgespeichert werden und Änderungen dieser Einstellungen können zu einer Warnung an den Benutzer 16 führen oder über den Optimierungsdatensatz bei der Ermittlung der Arbeitshöhe 15 berücksichtigt werden.

Weiter ist hier und vorzugsweise vorgesehen, dass die Sensor-Steueranordnung 10 einen Benutzer 16 mittels einer Ausgabeeinheit in einem natürlichsprachigen Dialog durch die Kalibrationsroutine leitet, vorzugsweise, dass die Sensor-Steueranordnung 10 dem Benutzer 16 eine Montageposition 11 vorgibt oder der Benutzer 16 die Montageposition 11, vorzugsweise per Spracheingabe, an die Sensor-Steueranordnung 10 übermittelt. Zusätzlich oder alternativ kann vorgesehen sein, dass die Sensor-Steueranordnung 10 dem Benutzer 16 eine Einstellung einer Arbeitshöhe 15 des Anbaugerätes 3 vorgibt oder der Benutzer 16 die Einstellung einer Arbeitshöhe 15, vorzugsweise per Spracheingabe, an die Sensor-Steueranordnung 10 übermittelt, und/oder, dass die Sensor-Steueranordnung 10 dem Benutzer 16 vorgibt, die landwirtschaftliche Arbeitsmaschine 1 und/oder das Anbaugerät 3 auf ebenem Grund abzustellen.

Der Dialog kann mittels eines Sprachausgabegerätes und/oder Spracheingabegerätes der landwirtschaftlichen Arbeitsmaschine 1 und/oder eines Smartphones durchgeführt werden. Genauso kann jedoch auch ein Terminal der landwirtschaftlichen Arbeitsmaschine 1 und/oder das Smartphone ohne Spracheingabe und/oder -ausgabe verwendet werden.

Hier und vorzugsweise ist vorgesehen, dass die landwirtschaftliche Arbeitsmaschine 1 und/oder das Anbaugerät 3 während der Kalibrationsroutine auf ebenem Untergrund steht, dass der Benutzer 16 die Sensorhalterung 9 an einer Montageposition 11 an einem landwirtschaftlichen Anbaugerät 3 montiert und den Sensor 8 mit der Sensorhalterung 9 verbindet und dass die Sensor-Steueranordnung 10 eine Kalibrationsroutine durchführt, in der die Sensor-Steueranordnung 10 eine Referenzhöhe ermittelt und einen montagepositionsspezifischen Kalibrationsdatensatz erzeugt und vorzugsweise in dem Speicher hinterlegt.

Die Ausgabeeinheit kann das Terminal oder das Smartphone sein und/oder das Sprachausgabegerät aufweisen.

Es kann vorgesehen sein, dass der Sensor 8 form- und/oder kraftschlüssig an der Sensorhalterung 9 montierbar ist, vorzugsweise, dass der Sensor 8 mittels einer Schnellspanneinrichtung und/oder mittels einer oder mehrerer Schrauben und/oder magnetisch an der Sensorhalterung 9 montierbar ist und/oder in die Sensorhalterung 9 einclipsbar ist. Bevorzugt ist der Sensor 8 mit handelsüblichem Werkzeug oder ganz ohne Werkzeug an der Sensorhalterung 9 montierbar.

Weiter ist hier und vorzugsweise vorgesehen, dass die Sensorhalterung 9 eine Batterie und/oder eine elektrische Verbindungseinheit, insbesondere ein Kabel oder eine Antenne, zur Verbindung mit der Steueranordnung und/oder zur Energieübertragung von einer landwirtschaftlichen Arbeitsmaschine 1 an den Sensor 8, aufweist, vorzugsweise, dass die elektrische Verbindungseinheit eine Busanbindung, insbesondere eine ISO-BUS- oder CAN Busanbindung, aufweist.

Mittels einer derart ausgestalteten Sensorhalterung 9 kann insbesondere der Sensor 8 mit Energie versorgt werden. Gleichzeitig oder alternativ kann die Sensorhalterung 9 so genutzt werden, um die Daten von dem Sensor 8 an die Sensor-Steueranordnung 10 zu übertragen. Besonders interessant ist das, wenn die Sensor-Steueranordnung 10 Teil der landwirtschaftlichen Arbeitsmaschine 1 ist oder die Verbindung zur Sensor-Steueranordnung 10 über die landwirtschaftliche Arbeitsmaschine 1 läuft. Weist die Sensorhalterung 9 ein Kabel auf, das gegebenenfalls mit einem Bus der landwirtschaftlichen Arbeitsmaschine 1 verbindbar ist, und verbleibt die Sensorhalterung 9 an dem landwirtschaftlichen Anbaugerät 3, muss die Verkabelung nur einmal vorgenommen werden. Damit wird das "plug and play"-Konzept der Sensoranordnung 6 konsequent weitergedacht. Die Batterie kann selbstverständlich alternativ ein Akku sein. Genauso kann der Sensor 8 auch eine eigene Batterie oder einen eigenen Akku aufweisen. Insbesondere ist auch denkbar, dass die Sensorhalterung 9 keinerlei Elektronik aufweist, wobei der NFC-Tag nicht als Elektronik zählt. Sofern das Anbaugerät 3 über eine eigene Energieversorgung verfügt, die gegebenenfalls von der landwirtschaftlichen Arbeitsmaschine 1 gespeist wird, kann der Sensor 8, insbesondere über die Sensorhalterung 9, auch mit dieser verbunden werden.

Wie bereits angedeutet, weisen diverse landwirtschaftliche Anbaugeräte 3 unterschiedliche relevante Arbeitshöhen 15 auf. Beispielhaft ist in Fig. 1 ein Pflug 5 mit mehreren Pflugscharen 18 dargestellt. Jede dieser Pflugscharen 18 weist eine eigene Arbeitshöhe 15 auf. Wenn der Pflug 5 beispielsweise entlang seiner Längsachse stark geneigt ist, würde das Optimieren nur einer Arbeitshöhe 15 nicht zu optimalen Ergebnissen führen.

Es kann vorgesehen sein, dass die Sensor-Steueranordnung 10 die Arbeitshöhe 15 zusätzlich aus einem anbaugerätespezifischen Kalibrationsdatensatz ermittelt und der anbaugerätespezifische Kalibrationsdatensatz eine Kinematik des jeweiligen Anbaugerätes 3 umfasst, und/oder, dass die Steueranordnung die Arbeitshöhe 15 zusätzlich aus einem Kopplungsdatensatz ermittelt und der Kopplungsdatensatz Maschinenparameter einer Geräteschnittstelle 2 zwischen der landwirtschaftlichen Arbeitsmaschine 1 und dem jeweiligen Anbaugerät 3 umfasst, vorzugsweise, dass der Kopplungsdatensatz Maschinenparameter eines Dreipunkt-Krafthebers umfasst.

Mittels des anbaugerätespezifischen Kalibrationsdatensatzes und Kopplungsdatensatzes kann beispielsweise über eine Achstransformation mit Hilfe der Kinematik des Anbaugerätes 3 oder über bekannte Maschinenparameter der Geräteschnittstelle 2 die Anzahl an notwendigen Sensoren 8 zur Ermittlung mehrerer Arbeitshöhen 15 reduziert werden. Auch die Ermittlung einer einzelnen Arbeitshöhe 15 kann so gegebenenfalls verifiziert oder genauer vorgenommen werden. In einem bevorzugten Ausführungsbeispiel kann allerdings mindestens eine Arbeitshöhe 15 ohne Berücksichtigung der Maschinenparameter der Geräteschnittstelle 2 ermittelt werden. Fig. 2 zeigt, wie mittels mehrerer Sensoren 8 mehrere Arbeitstiefen 7 ermittelt werden können, aus denen sich dann die Arbeitstiefen 7 der Pflugscharen 18 ermitteln lassen.

Grundsätzlich kann der anbaugerätespezifische Kalibrationsdatensatz in dem montagepositionsspezifischen Kalibrationsdatensatz enthalten sein oder andersrum. Der Kopplungsdatensatz kann anbaugerätespezifisch sein, muss dies jedoch nicht. Beispielsweise kann dieser Längen von Hydraulikzylindern der Geräteschnittstelle 2 umfassen. Allgemein sind unter Maschinenparametern sämtliche Einstellungen, zugehörige Sensormesswerte und dergleichen zu verstehen. Hier und vorzugsweise betreffen die Maschinenparameter zumindest teilweise Maschinenparameter, die einen direkten Einfluss auf die Arbeitshöhe 15, die ermittelt werden soll, haben.

Weiter ist hier und vorzugsweise vorgesehen, dass die Bodendaten eine Fruchtfolge des Feldes, insbesondere umfassend aktuelle Früchte und/oder vergangene Früchte und/oder Zwischenfrüchte und/oder geplante Früchte, und/oder Umweltdaten, vorzugsweise Klimadaten, insbesondere Temperaturen und/oder Niederschlagsmengen, und/oder Bodenartdaten und/oder Bodenzustandsdaten, umfassen.

Diese Daten können aus einer Datenbank stammen, aus dem Internet und/oder vom landwirtschaftlichen Gespann 4. Sie haben gemeinsam, dass sie zumeist das gesamte Feld betreffen. Neben diesen allgemeinen Daten können auch Bodendaten vorgesehen sein, die sehr spezifisch nur bestimmte Feldabschnitte und dergleichen betreffen. Diese werde im Folgenden näher betrachtet.

Hier und vorzugsweise ist es so, dass die ortsabhängigen Bodendaten Fahrspurdaten umfassen.

Weiter vorzugsweise ist vorgesehen, dass die Fahrspurdaten Gespanndaten zu auf den Fahrspuren genutzten Gespannen 4, insbesondere Radlasten und/oder Reifendimensionen und/oder Reifendrücke und/oder einen Bodenzustand beim Befahren, umfassen. Aus den Gespanndaten lässt sich dann auf eine Kompaktierung der Fahrspuren schließen.

Der Bodenzustand beim Befahren kann in einer vorherigen Planung mittels des Modells ermittelt worden sein. Besonders bevorzugt ist dabei, dass der Bodenzustand aus Daten vorheriger Anwendungen des vorschlagsgemäßen Verfahrens ermittelt wird.

Auch kann vorgesehen sein, dass die ortsabhängigen Bodendaten Arbeitsprozessdaten zu vergangenen Bodenbearbeitungsprozessen und/oder vergangenen Feldbestandsbearbeitungsprozessen umfassen. Vorzugsweise umfassen die Arbeitsprozessdaten Daten zu Arbeitstiefen 7 und/oder Anbaugeräten 3 vergangener Bodenbearbeitungsprozesse und/oder Daten zu Düngungen und/oder Pflanzenschutzmaßnahmen und/oder Beregnungen vergangener Feldbestandsbearbeitungsprozesse.

Insbesondere kann auch vorgesehen sein, dass aus einem vergangenen Bodenzustand in Kombination mit einem Verlauf von Bodenbearbeitungsprozessen ein aktueller Bodenzustand ermittelt wird.

Weiter ist hier und vorzugsweise vorgesehen, dass die Arbeitsprozessdaten Erntedaten vergangener Ernteperioden umfassen, vorzugsweise, dass das Modell basierend auf Erntedaten vergangener Arbeitsprozesse, insbesondere feldabhängig, angepasst wird.

Das Modell selbst ist hier und vorzugsweise in einem Grundzustand nicht auf ein einzelnes Feld angepasst, kann aber über Feedback, insbesondere aus den genannten Erntedaten, angepasst werden. Diese Anpassung geschieht hier und vorzugsweise automatisch. Dies trägt vor allem dem Umstand Rechnung, dass es kaum möglich ist, alle relevanten Bodeneigenschaften und Einflussparameter zu ermitteln. Diese Abweichungen werden hier und vorzugsweise mittels eine Korrekturfaktors berücksichtigt, der aus den Erntedaten vergangener Arbeitsprozesse ermittelt wird.

Es kann vorgesehen sein, dass die ortsabhängigen Bodendaten Umweltdaten umfassen, vorzugsweise, dass die Umweltdaten Bodenartdaten und/oder Bodenzustandsdaten umfassen, weiter vorzugsweise, dass die Bodenartdaten und/oder die Bodenzustandsdaten zumindest teilweise aus Bodenproben ermittelt wurden und/oder Nährstoffdaten umfassen.

Weiter ist hier und vorzugsweise vorgesehen, dass die ortsabhängigen Bodendaten Satellitendaten des Feldes, insbesondere aus Satellitendaten ermittelte Biomassedaten, umfassen, und/oder, dass die ortsabhängigen Bodendaten Bilddaten des Feldes, insbesondere Drohnenbilddaten des Feldes, umfassen, vorzugsweise, dass die Bilddaten des Feldes Unkrautdaten, insbesondere Unkrautarten, umfassen.

Weiterhin ist möglich, dass die Planungs-Steueranordnung 13 mittels des Modells vorhandene landwirtschaftliche Arbeitsmaschinen 1 und/oder Anbaugeräte 3 bei der Ermittlung der optimierten Arbeitstiefe 7 berücksichtigt, vorzugsweise, dass die Planungs-Steueranordnung 13 mittels des Modells eine landwirtschaftliche Arbeitsmaschine 1 und/oder ein Anbaugerät 3 zur Durchführung des Bodenbearbeitungsprozesses vorschlägt.

Landwirtschaftliche Betriebe weisen häufig eine Flotte an landwirtschaftlichen Arbeitsmaschinen 1 und landwirtschaftlichen Anbaugeräten 3 auf. Es ist dann regelmäßig notwendig, nicht nur einen Feldbearbeitungsprozess zu planen, sondern mehrere Arbeitsprozesse gleichzeitig. Die vorhandenen Ressourcen müssen auf diese Arbeitsprozesse aufgeteilt werden. Es kann einige Arbeitsprozesse geben, die stärker von der Arbeitshöhe 15 oder Arbeitstiefe 7 abhängen, als andere. Auch lässt sich nicht jede Arbeitshöhe 15 an jedem Anbaugerät 3 oder mit jeder landwirtschaftlichen Arbeitsmaschine 1 effizient einstellen. Somit ist es vorteilhaft, diese Faktoren bei der Planung zu berücksichtigen, um den Bodenbearbeitungsprozess so zu planen, dass die Arbeitstiefe 7 durchführbar und auch hinsichtlich anderer Arbeitsprozesse optimiert ist. Dafür kann die Planungs-Steueranordnung 13 neben der Arbeitstiefe 7 auch die Arbeitsmaschine 1 und das Anbaugerät 3 vorschlagen.

Weiter ist hier und vorzugsweise vorgesehen, dass die Planungs-Steueranordnung 13 mittels des Modells mindestens eine weitere optimierte Einstellung des Anbaugerätes 3, insbesondere in Abhängigkeit von der Arbeitstiefe 7, ermittelt, vorzugsweise, dass die weitere optimierte Einstellung eine Schnittbreite eines Pfluges 5 ist.

Ein Bodenbearbeitungsprozess, insbesondere bei einem Pflug 5, wird nicht nur durch die Arbeitstiefe 7 beeinflusst, sondern auch durch andere Maschinenparameter des Anbaugerätes 3, sondern auch durch andere Maschinenparameter des Anbaugerätes 3 wie eine Schnittbreite eines Pfluges 5.

Zusätzlich oder alternativ kann vorgesehen sein, dass die Planungs-Steueranordnung 13 mittels des Modells eine optimierte Auswahl eines oder mehrerer Sensoren 8 und/oder Sensortypen und/oder Montagepositionen 11 und/oder eine Sensoranzahl der Sensoranordnung 6 vorschlägt.

Es kann vorgesehen sein, dass unterschiedliche Typen von Sensoren 8, wie oben bereits genannt, vorgesehen sind. Auch können grundsätzlich, wie in Fig. 2 dargestellt, mehrere Sensoren 8 pro Anbaugerät 3 an unterschiedlichen Montagepositionen 11 verwendet werden. Im Sinne der Gesamtoptimierung, insbesondere auch mehrerer Arbeitsprozesse, kann entsprechend auch die Sensorplatzierung, -anzahl und -art optimiert werden.

Weiter ist hier und vorzugsweise vorgesehen, dass die Bodendaten zumindest teilweise in vergangenen Bodenbearbeitungsprozessen mittels desselben Sensors 8 der Sensoranordnung 6 ermittelt wurden, vorzugsweise, dass die Bodendaten zumindest teilweise in vergangenen Bodenbearbeitungsprozessen mittels desselben Sensors 8 der Sensoranordnung 6 an unterschiedlichen Anbaugeräten 3 ermittelt wurden.

Werden die Sensoren 8 über mehrere Perioden genutzt, insbesondere auch bei unterschiedlichen Anbaugeräten 3, können die Sensordaten dieser unterschiedlichen Arbeitsprozesse als Basis für das Modell dienen. Dabei ist hier und vorzugsweise vorgesehen, dass die Messdaten standardisiert und anbaugeräteunabhängig und/oder montagepositionsunabhängig gespeichert und verarbeitet werden. So kann mittels der Sensoranordnung 6 über längere Zeit eine Art Bodengedächtnis entstehen.

Möglich ist ebenfalls, dass die Planungs-Steueranordnung 13 bei der Ermittlung der optimierten Arbeitstiefe 7 Zielvorgaben zu konkurrierenden Zielen berücksichtigt, vorzugsweise dass die Zielvorgaben einen minimierten Kraftstoffverbrauch und/oder eine maximierte Geschwindigkeit der Durchführung des Bodenbearbeitungsprozesses und/oder eine Minimierung der Kosten des Bodenbearbeitungsprozesses und/oder eine Maximierung der Arbeitsqualität umfasst.

Unterschiedliche Zielvorgaben können daraus resultieren, dass grundsätzlich in der Landwirtschaft konkurrierende Ziele vorherrschen. Die maximale Geschwindigkeit beispielsweise geht zu Lasten einer Kraftstoffeffizienz. Je nach Kontext wird das eine oder das andere Ziel präferiert. Es ist also hier und vorzugsweise so, dass der Benutzer 16 die Zielvorgaben gewichten und diese Gewichtung vorzugsweise visuell einstellen kann. Diese Gewichtung kann sowohl bei der Planung des Bodenbearbeitungsprozesses als auch während der Durchführung eingegeben und berücksichtigt werden. Hier steht allerdings die Planung im Vordergrund.

Vorgeschlagen wird außerdem gemäß einer weiteren Lehre, der eigenständige Bedeutung zukommt, eine Planungs-Steueranordnung 13 eingerichtet zur Verwendung in dem vorschlagsgemäßen Verfahren.

Auf alle Ausführungen zu dem vorschlagsgemäßen Verfahren darf verwiesen werden.

### Bezugszeichenliste

- 1: landwirtschaftliche Arbeitsmaschine
- 2: Geräteschnittstelle
- 3: landwirtschaftliches Anbaugerät
- 4: landwirtschaftliches Gespann
- 5: Pflug
- 6: Sensoranordnung
- 7: Arbeitstiefe
- 8: Sensor
- 9: Sensorhalterung
- 10: Sensor-Steueranordnung
- 11: Montageposition
- 12: Boden
- 13: Planungs-Steueranordnung
- 14: Gespann-Steueranordnung
- 15: Arbeitshöhe
- 16: Benutzer
- 17: Identifikationsmerkmal
- 18: Pflugschar

## Patentansprüche

1. Verfahren zur Planung eines optimierten Bodenbearbeitungsprozesses eines Feldes für ein landwirtschaftliches Gespann (4), wobei das landwirtschaftliche Gespann (4) eine landwirtschaftliche Arbeitsmaschine (1) und ein bodenbearbeitendes landwirtschaftliches Anbaugerät (3) aufweist,
wobei eine Planungs-Steueranordnung (13) vorgesehen ist, wobei die Planungs-Steueranordnung (13) mittels eines Expertenmodells aus Bodendaten des Feldes Handlungsempfehlungen für den Bodenbearbeitungsprozess ermittelt,
wobei die Bodendaten des Feldes ortsabhängig sind,
wobei eine Sensoranordnung (6) zur Ermittlung einer absoluten Arbeitstiefe (7) des landwirtschaftlichen Anbaugerätes (3) vorgesehen ist, dass die Sensoranordnung (6) einen Sensor (8) zur Ermittlung von eine absolute Arbeitstiefe (7) des Anbaugerätes (3) betreffenden Messdaten, eine Sensorhalterung (9) und eine Sensor-Steueranordnung (10) aufweist,
wobei der Sensor (8) im an einer Montageposition (11) montierten Zustand während des Bodenbearbeitungsprozesses eine absolute Arbeitstiefe (7) des Anbaugerätes (3) betreffende Messdaten aufnimmt und an die Sensor-Steueranordnung (10) überträgt,
wobei die Planungs-Steueranordnung (13) mittels des Expertenmodells aus Bodendaten eine optimierte absolute Arbeitstiefe (7) des Anbaugerätes (3) für den Bodenbearbeitungsprozess als Handlungsempfehlung ermittelt,
wobei eine Gespann-Steueranordnung (14) die ermittelte optimierte Arbeitstiefe (7) für den Bodenbearbeitungsprozess am Anbaugerät (3) einstellt,
wobei die Sensor-Steueranordnung (10) aus den Messdaten eine montagepositionsunabhängige Arbeitstiefe (7) ermittelt, und wobei
die Planungs-Steueranordnung (13) die optimierte absolute Arbeitstiefe (7) montagepositionsabhängig ermittelt,
**dadurch gekennzeichnet, dass**
die Sensoranordnung (6) eingerichtet ist, mittels desselben Sensors (8) die Arbeitshöhe (15) unterschiedlicher Anbaugeräte (3) zu ermitteln.

2. Verfahren nach Anspruch 1, **dadurch gekennzeichnet, dass** die Handlungsempfehlungen eine Art der Bodenbearbeitung, vorzugsweise eine Empfehlung ob die Bodenbearbeitung ein Grubbern und/oder ein Pflügen umfassen soll, umfassen.

3. Verfahren nach Anspruch 1 oder 2, **dadurch gekennzeichnet, dass** die Handlungsempfehlungen eine Art der Bodenbearbeitung und Parameter der Bodenbearbeitung, insbesondere eine Arbeitstiefe, umfassen.

4. Verfahren nach einem der vorhergehenden Ansprüche, **dadurch gekennzeichnet, dass** der Sensor (8) reversibel an den Anbaugeräten (3) montierbar ist, dass der Sensor (8) zur Ermittlung der Arbeitshöhe (15) mehrerer Anbaugeräte (3) genutzt wird und dafür jeweils an dem Anbaugerät (3) montiert wird, vorzugsweise, dass der Sensor (8) mittels der mindestens einen Sensorhalterung (9) jeweils an einer Montageposition (11) an unterschiedlichen Anbaugeräten (3) reversibel montiert wird, dass die Sensorhalterung (9) vom Sensor (8) getrennt an den unterschiedlichen Anbaugeräten (3) montierbar ist und der Sensor (8) reversibel an der Sensorhalterung (9) montierbar ist.

5. Verfahren nach einem der vorhergehenden Ansprüche, **dadurch gekennzeichnet, dass** der Sensor (8) ein, insbesondere kontaktloser, Abstandssensor ist, vorzugsweise, dass der Abstandssensor auf Basis elektromagnetischer Wellen oder akustischer Wellen oder mechanischer Abtastung funktioniert, weiter vorzugsweise, dass der Abstandssensor ein Radar-Sensor oder ein Lidar-Sensor oder ein optischer Sensor oder ein Ultraschall-Sensor ist, oder, dass der Sensor (8) ein Sensor (8), insbesondere Kraftsensor oder Wegsensor, an einem den Boden (12) berührenden Bauteil, insbesondere einem Tastbügel, einer Schleifkufe oder einer Stützrolle, ist.

6. Verfahren nach einem der vorhergehenden Ansprüche, **dadurch gekennzeichnet, dass** die Bodendaten eine Fruchtfolge des Feldes, insbesondere umfassend aktuelle Früchte und/oder vergangene Früchte und/oder Zwischenfrüchte und/oder geplante Früchte, und/oder Umweltdaten, vorzugsweise Klimadaten, insbesondere Temperaturen und/oder Niederschlagsmengen, und/oder Bodenartdaten und/oder Bodenzustandsdaten, umfassen.

7. Verfahren nach einem der vorhergehenden Ansprüche, **dadurch gekennzeichnet, dass** die ortsabhängigen Bodendaten Fahrspurdaten umfassen, vorzugsweise, dass die Fahrspurdaten Gespanndaten zu auf den Fahrspuren genutzten Gespannen (4), insbesondere Radlasten und/oder Reifendimensionen und/oder Reifendrücke und/oder einen Bodenzustand beim Befahren, umfassen.

8. Verfahren nach einem der vorhergehenden Ansprüche, **dadurch gekennzeichnet, dass** die ortsabhängigen Bodendaten Arbeitsprozessdaten zu vergangenen Bodenbearbeitungsprozessen und/oder vergangenen Feldbestandsbearbeitungsprozessen umfassen, vorzugsweise, dass die Arbeitsprozessdaten Daten zu Arbeitstiefen (7) und/oder Anbaugeräten (3) vergangener Bodenbearbeitungsprozesse umfassen, und/oder, dass die Arbeitsprozessdaten Daten zu Düngungen und/oder Pflanzenschutzmaßnahmen und/oder Beregnungen vergangenen Feldbestandsbearbeitungsprozesse umfassen.

9. Verfahren nach Anspruch 8, **dadurch gekennzeichnet, dass** die Arbeitsprozessdaten Erntedaten vergangener Ernteperioden umfassen, vorzugsweise, dass das Modell basierend auf Erntedaten vergangener Arbeitsprozesse, insbesondere feldabhängig, angepasst wird.

10. Verfahren nach einem der vorhergehenden Ansprüche, **dadurch gekennzeichnet, dass** die ortsabhängigen Bodendaten Umweltdaten umfassen, vorzugsweise, dass die Umweltdaten Bodenartdaten und/oder Bodenzustandsdaten umfassen, weiter vorzugsweise, dass die Bodenartdaten und/oder die Bodenzustandsdaten zumindest teilweise aus Bodenproben ermittelt wurden und/oder Nährstoffdaten umfassen.

11. Verfahren nach einem der vorhergehenden Ansprüche, **dadurch gekennzeichnet, dass** die ortsabhängigen Bodendaten Satellitendaten des Feldes, insbesondere aus Satellitendaten ermittelte Biomassedaten, umfassen, und/oder, dass die ortsabhängigen Bodendaten Bilddaten des Feldes, insbesondere Drohnenbilddaten des Feldes, umfassen, vorzugsweise, dass die Bilddaten des Feldes Unkrautdaten, insbesondere Unkrautarten, umfassen.

12. Verfahren nach einem der vorhergehenden Ansprüche, **dadurch gekennzeichnet, dass** die Planungs-Steueranordnung (13) mittels des Modells vorhandene landwirtschaftliche Arbeitsmaschinen (1) und/oder Anbaugeräte (3) bei der Ermittlung der optimierten Arbeitstiefe (7) berücksichtigt, vorzugsweise, dass die Planungs-Steueranordnung (13) mittels des Modells eine landwirtschaftliche Arbeitsmaschine (1) und/oder ein Anbaugerät (3) zur Durchführung des Bodenbearbeitungsprozesses vorschlägt.

13. Verfahren nach einem der vorhergehenden Ansprüche, **dadurch gekennzeichnet, dass** die Planungs-Steueranordnung (13) mittels des Modells mindestens eine weitere optimierte Einstellung des Anbaugerätes (3), insbesondere in Abhängigkeit von der Arbeitstiefe (7), ermittelt, vorzugsweise, dass die weitere optimierte Einstellung eine Schnittbreite eines Pfluges (5) ist.

14. Verfahren nach einem der vorhergehenden Ansprüche, **dadurch gekennzeichnet, dass** die Planungs-Steueranordnung (13) mittels des Modells eine optimierte Auswahl eines oder mehrerer Sensoren (8) und/oder Sensortypen und/oder Montagepositionen (11) und/oder eine Sensoranzahl der Sensoranordnung (6) vorschlägt.

15. Verfahren nach einem der vorhergehenden Ansprüche, **dadurch gekennzeichnet, dass** die Bodendaten zumindest teilweise in vergangenen Bodenbearbeitungsprozessen mittels desselben Sensors (8) der Sensoranordnung (6) ermittelt wurden, vorzugsweise, dass die Bodendaten zumindest teilweise in vergangenen Bodenbearbeitungsprozessen mittels desselben Sensors (8) der Sensoranordnung (6) an unterschiedlichen Anbaugeräten (3) ermittelt wurden.

16. Verfahren nach einem der vorhergehenden Ansprüche, **dadurch gekennzeichnet, dass** die Planungs-Steueranordnung (13) bei der Ermittlung der optimierten Arbeitstiefe (7) Zielvorgaben zu konkurrierenden Zielen berücksichtigt, vorzugsweise dass die Zielvorgaben einen minimierten Kraftstoffverbrauch und/oder eine maximierte Geschwindigkeit der Durchführung des Bodenbearbeitungsprozesses und/oder eine Minimierung der Kosten des Bodenbearbeitungsprozesses und/oder eine Maximierung der Arbeitsqualität umfasst.

17. Planungs-Steueranordnung zur Planung eines optimierten Bodenbearbeitungsprozesses eines Feldes für ein landwirtschaftliches Gespann (4), wobei das landwirtschaftliche Gespann (4) eine landwirtschaftliche Arbeitsmaschine (1) und ein bodenbearbeitendes landwirtschaftliches Anbaugerät (3) aufweist, wobei die Planungs-Steueranordnung (13) eingerichtet ist, mittels eines Expertenmodells aus Bodendaten des Feldes Handlungsempfehlungen für den Bodenbearbeitungsprozess zu ermitteln, wobei die Bodendaten des Feldes ortsabhängig sind,
wobei eine Sensoranordnung (6) zur Ermittlung einer absoluten Arbeitstiefe (7) des landwirtschaftlichen Anbaugerätes (3) vorgesehen ist, dass die Sensoranordnung (6) einen Sensor (8) zur Ermittlung von eine absolute Arbeitstiefe (7) des Anbaugerätes (3) betreffenden Messdaten, eine Sensorhalterung (9) und eine Sensor-Steueranordnung (10) aufweist,
wobei der Sensor (8) eingerichtet ist, im an einer Montageposition (11) montierten Zustand während des Bodenbearbeitungsprozesses eine absolute Arbeitstiefe (7) des Anbaugerätes (3) betreffende Messdaten aufzunehmen und an die Sensor-Steueranordnung (10) zu übertragen,
wobei die Planungs-Steueranordnung (13) eingerichtet ist, mittels des Expertenmodells aus Bodendaten eine optimierte absolute Arbeitstiefe (7) des Anbaugerätes (3) für den Bodenbearbeitungsprozess als Handlungsempfehlung zu ermitteln,
wobei eine Gespann-Steueranordnung (14) eingerichtet ist, die ermittelte optimierte Arbeitstiefe (7) für den Bodenbearbeitungsprozess am Anbaugerät (3) einzustellen,
wobei die Sensor-Steueranordnung (10) eingerichtet ist, aus den Messdaten eine montagepositionsunabhängige Arbeitstiefe (7) zu ermitteln, und wobei
die Planungs-Steueranordnung (13) eingerichtet ist, die optimierte absolute Arbeitstiefe (7) montagepositionsabhängig zu ermitteln,
**dadurch gekennzeichnet, dass**
die Sensoranordnung (6) eingerichtet ist, mittels desselben Sensors (8) die Arbeitshöhe (15) unterschiedlicher Anbaugeräte (3) zu ermitteln.

## Claims

1. Method for planning an optimized tilling process of a field for an agricultural vehicle combination (4), wherein the agricultural vehicle combination (4) has an agricultural work machine (1) and a tilling agricultural implement (3),
wherein a planning control arrangement (13) is provided, wherein the planning control arrangement (13) determines recommended actions for the tilling process using an expert model based on soil data of the field,
wherein the soil data of the field is location dependent, wherein a sensor arrangement (6) is provided for determining an absolute working depth (7) of the agricultural implement (3), that the sensor arrangement (6) has a sensor (8) for determining measurement data relating to an absolute working depth (7) of the implement (3), a sensor mount (9) and a sensor control arrangement (10),
wherein the sensor (8), in the state in which it is mounted in a mounting position (11), receives measurement data relating to an absolute working depth (7) of the implement (3) during the tilling process and transmits it to the sensor control arrangement (10),
wherein the planning control arrangement (13) determines an optimized absolute working depth (7) of the implement (3) for the tilling process as a recommended action using the expert model based on soil data,
wherein a vehicle combination control arrangement (14) sets the determined optimized working depth (7) for the tilling process on the implement (3),
wherein the sensor control arrangement (10) determines a working depth (7) that is independent of the mounting position from the measurement data, and wherein the planning control arrangement (13) determines the optimized absolute working depth (7) depending on the mounting position, **characterized in that** the sensor arrangement (6) is configured to determine the working height (15) of different implements (3) by means of the same sensor (8).

2. Method according to Claim 1, **characterized in that** the recommended actions include a type of tilling, preferably a recommendation as to whether the tilling is intended to include cultivation and/or ploughing.

3. Method according to Claim 1 or 2, **characterized in that** the recommended actions include a type of tilling and parameters relating to tilling, in particular a working depth.

4. Method according to any of the preceding claims, **characterized in that** the sensor (8) can be reversibly mounted on the implements (3), **in that** the sensor (8) is used for determining the working height (15) of several implements (3) and for this purpose is mounted on the respective implement (3), preferably **in that** the sensor (8) is reversibly mounted in a respective mounting position (11) on different implements (3) by means of the at least one sensor mount (9), **in that** the sensor mount (9) can be mounted on the different implements (3) separately from the sensor (8) and the sensor (8) can be reversibly mounted on the sensor mount (9).

5. Method according to any of the preceding claims, **characterized in that** the sensor (8) is an, in particular contactless, distance sensor, preferably **in that** the distance sensor functions on the basis of electromagnetic waves or acoustic waves or mechanical scanning, further preferably **in that** the distance sensor is a radar sensor or a lidar sensor or an optical sensor or an ultrasonic sensor, or **in that** the sensor (8) is a sensor (8), in particular force sensor or displacement sensor, on a component that is in contact with the ground (12), in particular a sensor band, a skid or a support roller.

6. Method according to any of the preceding claims, **characterized in that** the soil data includes crop rotation in the field, in particular including current crops and/or past crops and/or intermediate crops and/or planned crops, and/or environmental data, preferably climate data, in particular temperatures and/or amounts of precipitation, and/or soil type data and/or soil condition data.

7. Method according to any of the preceding claims, **characterized in that** the location-dependent soil data includes lane data, preferably **in that** the lane data includes vehicle combination data relating to vehicle combinations (4) used on the lanes, in particular wheel loads and/or tyre dimensions and/or tyre pressures and/or a condition of the ground when it is driven on.

8. Method according to any of the preceding claims, **characterized in that** the location-dependent soil data includes work process data relating to past tilling processes and/or past field crop management processes, preferably **in that** the work process data includes data relating to working depths (7) and/or implements (3) of past tilling processes, and/or **in that** the work process data includes data relating to fertilization and/or crop protection measures and/or irrigation of past field crop management processes.

9. Method according to Claim 8, **characterized in that** the work process data includes harvest data of past harvest periods, preferably **in that** the model is adapted based on harvest data of past work processes, in particular in a field-dependent manner.

10. Method according to any of the preceding claims, **characterized in that** the location-dependent soil data includes environmental data, preferably **in that** the environmental data includes soil type data and/or soil condition data, further preferably **in that** the soil type data and/or the soil condition data was/were at least partially determined from soil samples and/or includes/include nutrient data.

11. Method according to any of the preceding claims, **characterized in that** the location-dependent soil data includes satellite data of the field, in particular biomass data determined from satellite data, and/or **in that** the location-dependent soil data includes image data of the field, in particular drone image data of the field, preferably **in that** the image data of the field includes weed data, in particular weed species.

12. Method according to any of the preceding claims, **characterized in that** the planning control arrangement (13) takes into account existing agricultural work machines (1) and/or implements (3) when determining the optimized working depth (7) using the model, preferably in that the planning control arrangement (13) proposes an agricultural work machine (1) and/or an implement (3) for carrying out the tilling process using the model.

13. Method according to any of the preceding claims, **characterized in that** the planning control arrangement (13) determines at least one further optimized setting of the implement (3), in particular as a function of the working depth (7), using the model, preferably **in that** the further optimized setting is a cutting width of a plough (5).

14. Method according to any of the preceding claims, **characterized in that** the planning control arrangement (13) proposes an optimized selection of one or more sensors (8) and/or sensor types and/or mounting positions (11) and/or a number of sensors of the sensor arrangement (6) using the model.

15. Method according to any of the preceding claims, **characterized in that** the soil data was at least partially determined in past tilling processes by means of the same sensor (8) of the sensor arrangement (6), preferably **in that** the soil data was at least partially determined in past tilling processes by means of the same sensor (8) of the sensor arrangement (6) on different implements (3).

16. Method according to any of the preceding claims, **characterized in that** the planning control arrangement (13) takes into account target specifications relating to competing targets when determining the optimized working depth (7), preferably **in that** the target specifications include minimized fuel consumption and/or maximized speed of execution of the tilling process and/or minimization of the costs of the tilling process and/or maximization of the work quality.

17. Planning control arrangement for planning an optimized tilling process of a field for an agricultural vehicle combination (4), wherein the agricultural vehicle combination (4) has an agricultural work machine (1) and a tilling agricultural implement (3), wherein the planning control arrangement (13) is configured to determine recommended actions for the tilling process using an expert model based on soil data of the field, wherein the soil data of the field is location dependent, wherein a sensor arrangement (6) is provided for determining an absolute working depth (7) of the agricultural implement (3), that the sensor arrangement (6) has a sensor (8) for determining measurement data relating to an absolute working depth (7) of the implement (3), a sensor mount (9) and a sensor control arrangement (10),
wherein the sensor (8), in the state in which it is mounted in a mounting position (11), is configured to receive measurement data relating to an absolute working depth (7) of the implement (3) during the tilling process and transmit it to the sensor control arrangement (10), wherein the planning control arrangement (13) is configured to determine an optimized absolute working depth (7) of the implement (3) for the tilling process as a recommended action using the expert model based on soil data,
wherein a vehicle combination control arrangement (14) is configured to set the determined optimized working depth (7) for the tilling process on the implement (3), wherein the sensor control arrangement (10) is configured to determine a working depth (7) that is independent of the mounting position from the measurement data, and wherein the planning control arrangement (13) is configured to determine the optimized absolute working depth (7) depending on the mounting position, **characterized in that** the sensor arrangement (6) is configured to determine the working height (15) of different implements (3) by means of the same sensor (8).

## Revendications

1. Procédé de planification d'un processus optimisé de traitement du sol d'un champ pour un attelage agricole (4), dans lequel l'attelage agricole (4) comporte une machine de travail agricole (1) et un accessoire agricole de traitement du sol (3),
un dispositif de commande de planification (13) étant prévu, le dispositif de commande de planification (13) déterminant des recommandations d'action pour le processus de traitement du sol à partir de données de sol du champ au moyen d'un modèle expert,
les données de sol du champ étant dépendantes de l'emplacement,
un dispositif capteur (6) étant prévu pour déterminer une profondeur de travail absolue (7) de l'accessoire agricole (3), que le dispositif capteur (6) comporte un capteur (8) pour déterminer des données de mesure relatives à une profondeur de travail absolue (7) de l'accessoire (3), un support de capteur (9) et un dispositif de commande de capteur (10),
le capteur (8), lorsqu'il est monté dans une position de montage (11), enregistrant des données de mesure relatives à une profondeur de travail absolue (7) de l'accessoire (3) pendant le processus de traitement du sol et transmettant ces données de mesure au dispositif de commande de capteur (10),
le dispositif de commande de planification (13) déterminant, au moyen du modèle expert à partir de données de sol, une profondeur de travail absolue optimisée (7) de l'accessoire (3) pour le processus de traitement du sol en tant que recommandation d'action, un dispositif de commande d'attelage (14) réglant la profondeur de travail optimisée déterminée (7) pour le processus de traitement du sol sur l'accessoire (3),
le dispositif de commande de capteur (10) déterminant une profondeur de travail (7) indépendante de la position de montage à partir des données de mesure et le dispositif de commande de planification (13) déterminant la profondeur de travail absolue optimisée (7) en fonction de la position de montage, **caractérisé en ce que** le dispositif capteur (6) est conçu pour déterminer la hauteur de travail (15) de différents accessoires (3) au moyen du même capteur (8).

2. Procédé selon la revendication 1, **caractérisé en ce que** les recommandations d'action comprennent un type de traitement du sol, de préférence une recommandation quant au fait que le traitement du sol doit comprendre un déchaumage et/ou un labourage.

3. Procédé selon la revendication 1 ou 2, **caractérisé en ce que** les recommandations d'action comprennent un type de traitement du sol et des paramètres de traitement du sol, en particulier une profondeur de travail.

4. Procédé selon l'une quelconque des revendications précédentes, **caractérisé en ce que** le capteur (8) peut être monté de manière réversible sur les accessoires (3), **en ce que** le capteur (8) est utilisé pour déterminer la hauteur de travail (15) de plusieurs accessoires (3) et est monté sur l'accessoire (3) à cet effet, respectivement, de préférence **en ce que** le capteur (8) est monté de manière réversible au niveau d'une position de montage (11) sur différents accessoires (3) au moyen de l'au moins un support de capteur (9), **en ce que** le support de capteur (9) peut être monté séparément du capteur (8) sur les différents accessoires (3) et le capteur (8) peut être monté de manière réversible sur le support de capteur (9).

5. Procédé selon l'une quelconque des revendications précédentes, **caractérisé en ce que** le capteur (8) est un capteur de distance, en particulier sans contact, de préférence **en ce que** le capteur de distance fonctionne sur la base d'ondes électromagnétiques ou d'ondes acoustiques ou d'un balayage mécanique, de préférence encore **en ce que** le capteur de distance est un capteur radar ou un capteur lidar ou un capteur optique ou un capteur à ultrasons, ou **en ce que** le capteur (8) est un capteur (8), en particulier un capteur de force ou un capteur de déplacement, sur un composant en contact avec le sol (12), en particulier un arceau palpeur, un patin de glissement ou un galet d'appui.

6. Procédé selon l'une quelconque des revendications précédentes, **caractérisé en ce que** les données de sol comprennent une rotation de cultures du champ, comprenant en particulier des cultures actuelles et/ou des cultures précédentes et/ou des cultures intermédiaires et/ou des cultures planifiées, et/ou des données environnementales, de préférence des données climatiques, en particulier des températures et/ou des quantités de précipitations, et/ou des données de type de sol et/ou des données d'état du sol.

7. Procédé selon l'une quelconque des revendications précédentes, **caractérisé en ce que** les données de sol dépendantes de l'emplacement comprennent des données de voies de circulation, de préférence **en ce que** les données de voies de circulation comprennent des données d'attelage relatives à des attelages (4) utilisés sur les voies de circulation, en particulier des charges de roue et/ou des dimensions de pneu et/ou des pressions de pneu et/ou un état du sol pendant le passage.

8. Procédé selon l'une quelconque des revendications précédentes, **caractérisé en ce que** les données de sol dépendant de l'emplacement comprennent des données de processus de travail relatives à des processus de traitement du sol antérieurs et/ou à des processus de traitement des champs antérieurs, de préférence **en ce que** les données de processus de travail comprennent des données relatives à des profondeurs de travail (7) et/ou à des accessoires (3) de processus de travail antérieurs et/ou **en ce que** les données de processus de travail comprennent des données relatives à des fertilisations et/ou des mesures de protection des plantes et/ou des irrigations de processus de traitement de cultures antérieurs.

9. Procédé selon la revendication 8, **caractérisé en ce que** les données de processus de travail comprennent des données de récolte de périodes de récolte passées, de préférence **en ce que** le modèle est adapté sur la base des données de récolte de processus de travail antérieurs, en particulier en fonction du champ.

10. Procédé selon l'une quelconque des revendications précédentes, **caractérisé en ce que** les données de sol dépendant de l'emplacement comprennent des données environnementales, de préférence **en ce que** les données environnementales comprennent des données de type de sol et/ou des données d'état du sol, de préférence encore **en ce que** les données de type de sol et/ou les données d'état du sol ont été déterminées au moins partiellement à partir d'échantillons de sol et/ou comprennent des données de nutriments.

11. Procédé selon l'une quelconque des revendications précédentes, **caractérisé en ce que** les données de sol dépendant de l'emplacement comprennent des données satellitaires du champ, en particulier des données de biomasse déterminées à partir de données satellitaires, et/ou **en ce que** les données de sol dépendant de l'emplacement comprennent des données d'image du champ, en particulier des données d'image par drone du champ, de préférence **en ce que** les données d'image du champ comprennent des données de mauvaises herbes, en particulier des espèces de mauvaises herbes.

12. Procédé selon l'une quelconque des revendications précédentes, **caractérisé en ce que** le dispositif de commande de planification (13) tient compte, au moyen du modèle, des machines de travail agricoles (1) et/ou des accessoires (3) existants lors de la détermination de la profondeur de travail optimisée (7), de préférence **en ce que** le dispositif de commande de planification (13) propose, au moyen du modèle, une machine de travail agricole (1) et/ou un accessoire (3) pour la mise en œuvre du processus de traitement du sol.

13. Procédé selon l'une quelconque des revendications précédentes, **caractérisé en ce que** le dispositif de commande de planification (13) détermine, au moyen du modèle, au moins un autre réglage optimisé de l'accessoire (3), en particulier en fonction de la profondeur de travail (7), de préférence **en ce que** l'autre réglage optimisé est une largeur de coupe d'une charrue (5).

14. Procédé selon l'une quelconque des revendications précédentes, **caractérisé en ce que** le dispositif de commande de planification (13) propose, au moyen du modèle, une sélection optimisée d'un ou plusieurs capteurs (8) et/ou types de capteurs et/ou positions de montage (11) et/ou un nombre de capteurs du dispositif capteur (6).

15. Procédé selon l'une quelconque des revendications précédentes, **caractérisé en ce que** les données de sol ont été déterminées au moins partiellement au moyen du même capteur (8) du dispositif capteur (6) lors de processus de traitement du sol antérieurs, de préférence **en ce que** les données de sol ont été déterminées au moins partiellement au moyen du même capteur (8) du dispositif capteur (6) sur différents accessoires (3) lors de processus de traitement du sol antérieurs.

16. Procédé selon l'une quelconque des revendications précédentes, **caractérisé en ce que** le dispositif de commande de planification (13) prend en compte des objectifs cibles par rapport à des objectifs concurrents lors de la détermination de la profondeur de travail optimisée (7), de préférence **en ce que** les objectifs cibles comprennent une consommation de carburant minimisée et/ou une vitesse maximisée de la mise en œuvre du processus de traitement du sol et/ou une minimisation des coûts du processus de traitement du sol et/ou une maximisation de la qualité du travail.

17. Dispositif de commande de planification pour planifier un processus optimisé de traitement du sol d'un champ pour un attelage agricole (4), l'attelage agricole (4) comportant une machine de travail agricole (1) et un accessoire agricole de traitement du sol (3), le dispositif de commande de planification (13) étant conçu pour déterminer, au moyen d'un modèle expert à partir de données de sol du champ, des recommandations d'action pour le processus de traitement du sol, les données de sol du champ étant dépendantes de l'emplacement,
un dispositif capteur (6) étant prévu pour déterminer une profondeur de travail absolue (7) de l'accessoire agricole (3), que le dispositif capteur (6) comporte un capteur (8) pour déterminer des données de mesure relatives à une profondeur de travail absolue (7) de l'accessoire (3), un support de capteur (9) et un dispositif de commande de capteur (10),
le capteur (8) étant conçu, lorsqu'il est monté dans une position de montage (11), pour enregistrer des données de mesure relatives à une profondeur de travail absolue (7) de l'accessoire (3) pendant le processus de traitement du sol et transmettre ces données de mesure au dispositif de commande de capteur (10),
le dispositif de commande de planification (13) étant conçu pour déterminer, au moyen du modèle expert à partir de données de sol, une profondeur de travail absolue optimisée (7) de l'accessoire (3) pour le processus de traitement du sol en tant que recommandation d'action, un dispositif de commande d'attelage (14) étant conçu pour régler la profondeur de travail optimisée déterminée (7) pour le processus de traitement du sol sur l'accessoire (3),
le dispositif de commande de capteur (10) étant conçu pour déterminer une profondeur de travail (7) indépendamment de la position de montage à partir des données de mesure, et le dispositif de commande de planification (13) étant conçu pour déterminer la profondeur de travail absolue optimisée (7) en fonction de la position de montage, **caractérisé en ce que** le dispositif capteur (6) est conçu pour déterminer la hauteur de travail (15) de différents accessoires (3) au moyen du même capteur (8).
